Europäisches Patentamt

European Patent Office

Office européen des brevets

(11) Numéro de publication : **0 454 576 A1**

## (12) DEMANDE DE BREVET EUROPEEN

(21) Numéro de dépôt : 91401087.1

(22) Date de dépôt : 24.04.91

(51) Int. Cl.⁵ : **G06K 19/073, G07F 7/10**

(30) Priorité : 27.04.90 FR 9005427

(43) Date de publication de la demande :
**30.10.91 Bulletin 91/44**

(84) Etats contractants désignés :
**AT BE CH DE DK ES GB GR IT LI LU NL SE**

(71) Demandeur : **MATRA COMMUNICATION**
**50, rue du Président Sadate Creac'h Gwenn**
**F-29101 Quimper (FR)**

(72) Inventeur : **Gastaldi, Raymond**
**50 rue du Président Sadate, Creac'h-Gwenn**
**F-29101 Quimper (FR)**

(74) Mandataire : **Fruchard, Guy et al**
**CABINET BOETTCHER 23, rue la Boétie**
**F-75008 Paris (FR)**

(54) Procédé de condamnation d'un organe électronique à mémoire et carte électronique comportant un organe électronique condamné.

(57)    Le procédé selon l'invention s'applique à un organe électronique à mémoire (1) relié à un circuit électronique (2) par une série de fils de liaison (4) et comporte l'étape d'effectuer un sectionnement, de préférence au moyen d'un perçage (6), d'au moins un des fils de liaison (4) après avoir initialisé l'organe électronique à mémoire.

FIG. 2

EP 0 454 576 A1

La présente invention concerne un procédé de condamnation d'un organe électronique à mémoire et une carte électronique comportant un organe électronique condamné.

On connait des cartes électroniques comportant un substrat sur lequel sont fixés un organe électronique à mémoire, par exemple un organe multicouche réalisé à partir d'une série de masques, et un circuit électronique, reliés l'un à l'autre par une série de fils de liaison, le substrat formant généralement l'une des parois d'un boîtier de la carte électronique. Ces cartes sont de plus en plus utilisées comme mode de paiement pour des services particuliers, par exemple pour des communications téléphoniques ou pour le péage d'un stationnement. Dans ce cas, l'organe électronique à mémoire est initialisé lors de la fabrication de la carte électronique et est ainsi mis dans un état représentant une somme d'argent déterminée. Lors de l'utilisation de la carte électronique, l'état de l'organe électronique à mémoire est progressivement modifié d'une façon correspondante à un épuisement progressif du crédit représenté par l'état initial. Bien que l'organe électronique à mémoire soit généralement protégé contre une réinitialisation frauduleuse d'une part au moyen de couches de résine de protection masquant les bornes servant à l'initialisation de l'organe électronique, et d'autre part par un code d'accès, il s'avère que des usagers mal intentionnés réussissent à violer les protections établies et à réutiliser la même carte plusieurs fois de suite sans acquitter la somme correspondant au crédit alloué par une réinitialisation.

Par ailleurs on connait du document WO-A-83 00244 une galette de silicium sur laquelle sont réalisées des puces disposées de façon adjacente, chaque puce étant reliée par des lignes de liaison à des contacts de chargement portés par une puce voisine. Lors de la fabrication, la mémoire d'une première puce est chargée en appliquant les contacts d'un appareil de chargement sur les contacts de chargement disposés sur la seconde puce et vice versa puis la galette est rainurée de façon habituelle pour séparer les puces, ce qui a pour effet de sectionner les fils de liaison et donc de rendre totalement inutiles les contacts de chargement de chacune des puces. Un tel procédé ne permet pas d'effectuer un sectionnement sélectif des lignes de liaison ni de charger la puce lorsqu'elle est mise en place sur un substrat.

Un but de la présente invention est de proposer un procédé permettant une condamnation sélective de l'organe électronique.

En vue de la réalisation de ce but, on propose selon l'invention un procédé de condamnation d'un organe électronique à mémoire porté par un substrat isolant et relié par une série de fils de liaison noyés dans un résine de protection à un circuit électronique également porté par le substrat isolant caractérisé en ce qu'il comporte l'étape d'effectuer un sectionnement d'au moins un des fils de liaison par perçage au droit du fil de liaison à sectionner.

On a en effet constaté que dans la plupart des cas l'une des bornes de l'organe électronique à mémoire ne servait qu'à l'initialisation de celui-ci et qu'un sectionnement du fil de liaison correspondant après l'initialisation de l'organe électronique permettait de condamner l'accès à cet organe électronique sans pour autant perturber le fonctionnement normal de la carte électronique.

Selon une version avantageuse de l'invention le perçage est un perçage borgne réalisé à partir d'un côté du substrat opposé à l'organe électronique à mémoire.

D'autres caractéristiques et avantages de l'invention apparaîtront encore à la lecture de la description qui suit d'un exemple de réalisation non limitatif de l'invention en liaison avec les dessins ci-joints parmi lesquels :

    – la figure 1 est une vue en perspective schématique partielle d'une carte électronique en cours de réalisation,

    – la figure 2 est une vue en coupe partielle très agrandie selon la ligne II-II de la figure 1, après initialisation de l'organe électronique à mémoire et condamnation de celui-ci.

En référence aux figures, la carte électronique selon l'invention est réalisée en fixant tout d'abord un organe électronique à mémoire 1 et un circuit électronique 2, par exemple un circuit imprimé, sur un substrat 3 de préférence destiné à former une paroi de la carte électronique finalement obtenue.

De façon connue en soi, l'organe électronique à mémoire 1 et le circuit électronique 2 sont reliés l'un à l'autre par des fils de liaison 4. De façon également connue en soi, l'organe électronique à mémoire 1 et les fils de liaison 4 sont ensuite recouverts par une résine de protection 5 puis la carte électronique est initialisée selon un processus d'initialisation propre à l'organe électronique utilisé.

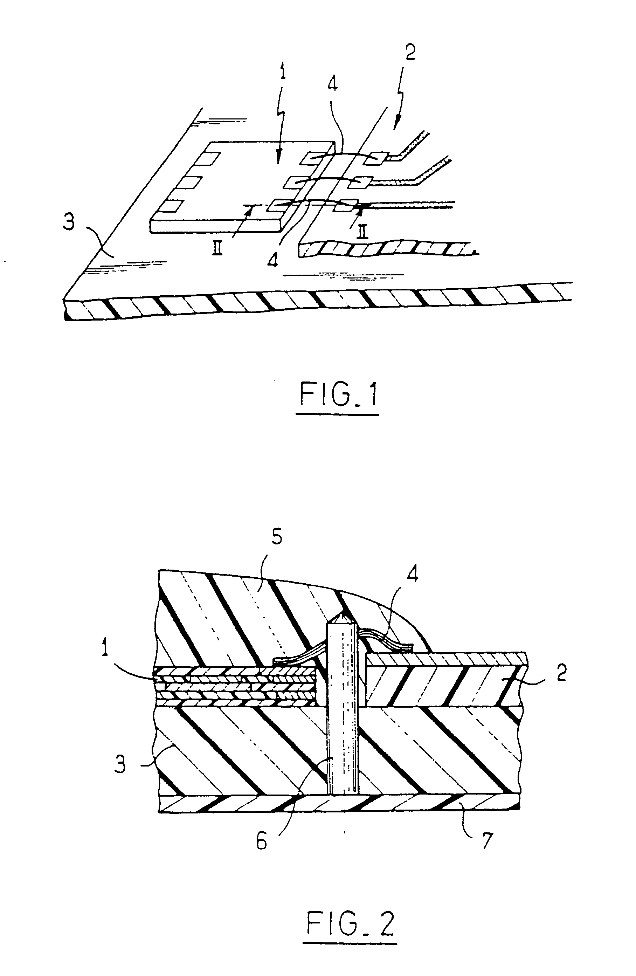

Selon l'invention, après initialisation de l'organe électronique à mémoire 1, on prévoit de sectionner au moins l'un des fils de liaison 4, de préférence en effectuant un perçage 6 du substrat 3 et de la résine de protection 5 au droit du fil de liaison 4 correspondant à la borne d'initialisation de l'organe électronique, sur une profondeur suffisante pour sectionner le fil de liaison 4 correspondant comme illustré par la figure 2. De préférence le perçage 6 ne traverse pas totalement l'ensemble substrat-résine de protection. On remarquera que dans le cas où le positionnement de la carte électronique est effectué manuellement au moment du perçage, il est préférable d'effectuer ce perçage à partir d'un côté du substrat opposé à celui qui supporte l'organe électronique 1 et le circuit électronique 2 afin de permettre un repérage de l'endroit où le perçage doit être effectué au moyen d'une marque. On notera également que le diamètre du perçage est de préférence juste nécessaire pour assurer de façon certaine un sectionnement d'un des fils de liaison 4. Dans le cas habituel un perçage ayant un diamètre d'environ 1 mm est généralement suffisant.

Après sectionnement du fil de liaison 4, la face du substrat 3 sur laquelle débouche ce perçage est de préférence recouverte par un revêtement protecteur, par exemple un film en matière plastique 7 collé sur le substrat, ou comblé par addition de résine de protection.

Bien entendu l'invention n'est pas limitée au mode de réalisation décrit et on peut y apporter des variantes de réalisation sans sortir du cadre de l'invention. En particulier, bien que selon le mode de réalisation préféré de l'invention, le sectionnement d'au moins un fil de liaison 4 soit réalisé par un perçage de la carte électronique, on peut également prévoir de sectionner un fil de liaison par d'autres moyens, par exemple par cisaillement, les extrémités des tronçons de fils de liaison sectionnés étant de toute façon de préférence noyées dans une résine afin d'augmenter la difficulté de rétablissement de la liaison.

**Revendications**

1. Procédé de condamnation d'un organe électronique à mémoire (1) porté par un substrat isolant (3) et relié par une série de fils de liaison (4) noyés dans une résine de protection (5) à un circuit électronique également porté par le substrat isolant (3) caractérisé en ce qu'il comporte l'étape d'effectuer un sectionnement d'au moins un des fils de liaison (4) par perçage au droit du fil de liaison à sectionner.

2. Procédé de condamnation d'un organe électronique à mémoire selon la revendication 1 caractérisé en ce que le perçage est un perçage borgne réalisé à partir d'un côté du substrat opposé à l'organe électronique à mémoire.

3. Carte électronique comportant un substrat (3) sur lequel sont fixés un organe électronique à mémoire (1) et un circuit électronique (2) reliés l'un à l'autre par une série de fils de liaison (4) caractérisée en ce qu'elle comporte au moins un perçage (6) traversant le substrat au droit d'un fil de liaison et s'étendant entre deux tronçons de fil de liaison sectionné.

4. Carte électronique selon la revendication 3, comportant un revêtement sur un côté du substrat opposé à l'organe électronique à mémoire (1) caractérisé en ce que le revêtement (7) recouvre le perçage (6).

FIG_1

FIG_2

EP 0 454 576 A1

Office européen
des brevets

**RAPPORT DE RECHERCHE EUROPEENNE**

Numero de la demande

EP 91 40 1087

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | COMPUTER COMMUNICATIONS vol. 12, no. 1, février 1989, pages 25-30, London, GB; M.A. REID et al.: "Security issues in the use of smart cards" * page 27, colonne de gauche, "Honeywell Bull CP8 card" * | 1,3 | G 06 K 19/073 G 07 F 7/10 |
| Y | WO-A-8 300 244 (MOTOROLA) * abrégé; figure 2; page 1, lignes 12-27; page 4, lignes 30-32; page 7, ligne 23 - page 8, ligne 26 * | 1,3 | |
| A | EP-A-0 217 281 (CASIO) * abrégé; figures 2,7; colonne 1, ligne 34 - colonne 2, ligne 41; colonne 4, lignes 11-14; colonne 10, ligne 10 - colonne 11, ligne 14 * | 1-4 | |
| A | FR-A-2 634 095 (BULL CP8) * page 5, lignes 1-29; page 9, ligne 30 - page 10, ligne 21; figures 1-7 * | 1-4 | |
| A | US-A-4 105 156 (J. DETHLOFF) * abrégé; figure 2; colonne 5, lignes 15-20 * | 1,3 | DOMAINES TECHNIQUES RECHERCHES (Int. Cl.5) G 06 K G 11 C G 07 F G 06 F |
| A | EP-A-0 297 209 (MOTOROLA) * abrégé * | 1,3 | |

Le présent rapport a été établi pour toutes les revendications

| Lieu de la recherche | Date d'achèvement de la recherche | Examinateur |
|---|---|---|
| BERLIN | 08-07-1991 | FRITZ S C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

5